(19) Europäisches Patentamt
European Patent Office
Office européen des brevets

(11) **EP 3 376 573 A1**

(12) **EUROPEAN PATENT APPLICATION**
published in accordance with Art. 153(4) EPC

(43) Date of publication:
**19.09.2018 Bulletin 2018/38**

(51) Int Cl.:
**H01M 4/525** (2010.01)    **H01M 4/505** (2010.01)

(21) Application number: **16864046.4**

(22) Date of filing: **28.10.2016**

(86) International application number:
**PCT/JP2016/082080**

(87) International publication number:
**WO 2017/082083 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.11.2015 JP 2015220159**

(71) Applicant: **NEC Energy Devices, Ltd.**
**Chuo-ku**
**Sagamihara-shi**
**Kanagawa 252-5298 (JP)**

(72) Inventor: **YAMAMOTO, Yoshimasa**
**Sagamihara-shi**
**Kanagawa 252-5298 (JP)**

(74) Representative: **Glawe, Delfs, Moll**
**Partnerschaft mbB von**
**Patent- und Rechtsanwälten**
**Postfach 13 03 91**
**20103 Hamburg (DE)**

(54) **LITHIUM ION SECONDARY BATTERY AND METHOD FOR MANUFACTURING SAME**

(57)    There is provided a lithium ion secondary battery comprising a positive electrode containing, as a positive electrode active material, a lithium nickel composite oxide having a layered rock salt structure, a negative electrode containing a negative electrode active material capable of occluding and releasing lithium ions, an electrolyte, and an outer package, wherein the lithium nickel composite oxide is represented by the composition formula $LiNi_xM_{1-x}O_2$ (x represents a numerical value of 0.75 to 1, and M represents at least one metal element occupying nickel sites other than Ni), and has a crystal phase having, in a full charge state, an interplanar spacing d(003) larger than an interplanar spacing d(003) in a complete discharge state.

FIG.1

**Description**

Technical Field

The present invention relates to a lithium ion secondary battery and a method for manufacturing the same.

Background Art

Lithium ion secondary batteries, since being high in the energy density and excellent in the charge and discharge cycle characteristics, are broadly used as power sources for small-size mobile devices such as cell phones and laptop computers. Further in recent years, in consideration of the environmental problem and in growing concern for the energy saving, there have been raised demands for large-size power sources requiring a high capacity and a long life, including vehicular power storage batteries for cars such as electric cars and hybrid electric cars, and power storage systems such as household power storage systems.

Various studies are being carried out in order to improve characteristics of lithium ion secondary batteries.

Patent Literature 1 describes a lithium battery containing: as a positive electrode active material, a composite oxide being represented by the composition formula $LiNi_{1-x}M_xO_2$ (M is an element partially substituted for Ni of $LiNiO2$ and capable of becoming a cation other than Ni and Co, $0 < x \leq 0.5$) and exhibiting, in X-ray analysis, a peak intensity of an interplanar spacing of $4.72 \pm 0.03$ Å 1.2 or more times a peak intensity of an interplanar spacing of $2.03 \pm 0.02$ Å; and lithium or a compound thereof as a negative electrode active material. This Patent Literature describes that the invention solves such problems that the charge and discharge capacity in a high voltage region is insufficient and the storage characteristic is poor, and has an object to provide a lithium battery high in the charge and discharge energy and excellent in the storage characteristic.

Patent Literature 2 describes a nonaqueous electrolyte solution secondary battery includes a positive electrode using a composite oxide containing lithium as a positive electrode active material, a negative electrode using a carbonaceous material capable of doping and dedoping lithium as a negative electrode active material, and a nonaqueous electrolyte solution, wherein the positive electrode active material is represented by $Li_{1-x}Ni_yCo_{1-y}O_2$ ($0.50 \leq y \leq 1.00$), and is composed of a lithium·nickel·cobalt composite oxide in which the x value at the charge end is set at $0.65 \leq x \leq 0.92$. The invention described in this Patent Literature has an object to provide a nonaqueous electrolyte solution secondary battery that can ensure the capacity and simultaneously have the excellent cycle characteristic, and further have a large integrated energy until the battery reaches its life.

Patent Literature 3 describes a lithium secondary battery having, positive electrode active material, as a positive electrode active material, a lithium composite oxide being represented by the composition formula $LiMn_xNi_{1-x}O_2$ ($0.05 \leq x \leq 0.3$) and exhibiting, in powder X-ray diffractometry, a ratio $I_{003}/I_{104}$ of an intensity $I_{003}$ of the diffraction line of the (003) plane to an intensity $I_{104}$ of the diffraction line of the (104) plane of 1.0 or higher and 1.6 or lower, and a negative electrode containing, as a negative electrode active material, a carbon material capable of occluding and releasing lithium. The invention described in this Patent Literature has an object to provide a lithium secondary battery good in the cycle characteristic.

Citation List

Patent Literature

Patent Literature 1: JP06-215800A
Patent Literature 2: JP07-320721A
Patent Literature 3: JP2000-294240A

Summary of Invention

Technical Problem

However, more improvements are demanded for input and output characteristics of lithium ion secondary batteries. Then, an object of the present invention is to provide a lithium ion secondary battery good in input and output characteristics.

Solution to Problem

One aspect of the present invention provides a lithium ion secondary battery, comprising: a positive electrode comprising, as a positive electrode active material, a lithium nickel composite oxide having a layered rock salt structure; a negative electrode comprising a negative electrode active material capable of occluding and releasing lithium ions; an electrolyte; and an outer package,
wherein the lithium nickel composite oxide is represented by the composition formula $LiNi_xM_{1-x}O_2$ where x represents a numerical value of 0.75 to 1, and M represents at least one metal element occupying nickel sites other than Ni, and the lithium nickel composite oxide has a crystal phase having, in a full charge state, an interplanar spacing d(003) larger than an interplanar spacing d(003) in a complete discharge state.

Another aspect of the present invention provides a method for manufacturing a lithium ion secondary battery comprising a positive electrode comprising, as a positive electrode active material, a lithium nickel composite oxide having a layered rock salt structure, a negative electrode comprising a negative electrode active material capable of occluding and releasing lithium ions, an electrolyte, and an outer package, the method comprising:

forming the positive electrode;
forming the negative electrode;
accommodating the positive electrode, the negative electrode and the electrolyte in the outer package,
wherein the lithium nickel composite oxide is represented by the composition formula $LiNi_xM_{1-x}O_2$ where x represents a numerical value of 0.75 to 1, and M represents at least one metal element occupying nickel sites other than Ni; and interplanar spacings d(003) of the lithium nickel composite oxide in charge voltages in a range including a lower limit voltage and an upper limit voltage are measured by X-ray analysis, and the upper limit voltage is set in a range in the charge voltages where a crystal phase having an interplanar spacing d(003) larger than an interplanar spacing d(003) in a complete discharge state is present.

Advantageous Effect of Invention

According to the exemplary embodiment, a lithium ion secondary battery good in input and output characteristics can be provided.

Brief Description of Drawings

[Figure 1] Figure 1 is a cross-sectional view to interpret one example of a lithium ion secondary battery according to the exemplary embodiment.
[Figure 2] Figure 2 is a diagram showing measurement results of in-situ XRD of a cell fabricated by using a lithium nickel composite oxide.
[Figure 3] Figure 3 is a diagram showing relations between the interplanar spacing d(003) and the charge voltage, based on the measurement results of in-situ XRD.
[Figure 4] Figure 4 is a diagram showing relations between the voltage and the charge transfer resistance.

Description of Embodiment

A lithium ion secondary battery according to the exemplary embodiment comprises a positive electrode containing, as a positive electrode active material, a lithium nickel composite oxide having a layered rock salt structure with large nickel content, a negative electrode containing a negative electrode active material capable of occluding and releasing lithium ions, an electrolyte, and an outer package.

From the point of the energy density enhancement, it is preferable to use, as a positive electrode active material, a lithium composite oxide containing nickel (lithium nickel composite oxide). In use of a lithium nickel composite oxide having a high nickel content, however, the charge transfer resistance is likely to rise in a high state of charge (SOC) region. In the present invention, it has been found by paying attention to this phenomenon that a secondary battery excellent in input and output characteristics is provided by avoiding a region in high SOC where the charge transfer resistance largely rises and utilizing a region where the change in the charge transfer resistance is small; and this finding has led to the completion of the present invention.

That is, the major feature of the lithium ion secondary battery according to the exemplary embodiment is that the lithium nickel composite oxide is represented by the composition formula $LiNi_xM_{1-x}O_2$ (x represents a numerical value of 0.75 to 1, and M represents at least one metal element other than Ni occupying nickel sites), and has a crystal phase having, in a full charge state, an interplanar spacing d(003) larger than an interplanar spacing d(003) in a complete discharge state.

Further the major feature of the manufacturing method of the lithium ion secondary battery according to the exemplary embodiment is that interplanar spacings d(003) of the lithium nickel composite oxide in charge voltages in a range including a lower limit voltage and an upper limit voltage are measured by X-ray analysis, and the upper limit voltage is set in a range in the charge voltages where a crystal phase having an interplanar spacing d(003) larger than an interplanar spacing d(003) in a complete discharge state is present.

According to the exemplary embodiment, there can be provided a lithium ion secondary battery high in the energy density because a lithium nickel composite oxide having a high nickel content is used, and good in the input and output characteristics because though the lithium nickel composite oxide having a high nickel content is used, the charge transfer resistance in a high SOC region is not very high.

The state of charge (SOC) is a ratio (%) of a residual capacity to a full charge capacity. The full charge capacity is a total electric charge quantity discharged when a battery is completely discharged at a prescribed temperature (for example, 25°C) at a constant current from a full charge state. The electric charge quantity can be determined by integrating the current (constant). The full charge capacity is defined to be a full charge capacity at the first-time charging (initial full charge capacity).

The full charge state refers to a state where the voltage of a battery has become the upper limit voltage, and the complete discharge state refers to a state where the voltage of the battery has become the lower limit voltage (end voltage).

Although the upper limit voltage and the lower limit voltage are generally determined as theoretical values for a material of a battery, in order to suppress the deterioration of the battery, a voltage lower than the theoretical upper limit voltage can be set as an upper limit voltage; and a voltage higher than the theoretical lower limit voltage can be set as a lower limit voltage.

The ratio of an interplanar spacing d(003) of the crystal phase in the full charge state to an interplanar spacing d(003) thereof in the complete discharge state is preferably 1.001 or higher, more preferably 1.005 or higher, and still more preferably 1.01 or higher. This ratio is preferably in the range of 1.03 or lower, and more preferably in the range of 1.025 or lower.

Then, the intensity at $2\theta = 18.9$ by X-ray diffractometry is preferably higher than that at $2\theta = 19.1$.

The upper limit voltage in the above-mentioned lithium ion secondary battery and manufacturing method thereof is preferably in the range of 3.7 to 4.25 V (vs. Li/Li$^+$), and more preferably in the range of 3.9 to 4.2 V (vs. Li/Li$^+$). The lower limit voltage can be set in the range of 2.0 to 3.1 V (vs. Li/Li$^+$), and is preferably in the range of 2.5 to 3.1 V (vs. Li/Li$^+$).

The lithium ion secondary battery according to the exemplary embodiment can have the following suitable constitution.

The positive electrode preferably has a structure having a current collector and a positive electrode active material layer formed on the current collector.

The positive electrode active material layer, from the point of the energy density enhancement, preferably contains a lithium nickel composite oxide having a layered rock salt structure containing nickel. The positive electrode active material layer may contain other active materials other than the lithium nickel composite oxide, but from the point of the energy density, the contain rate of the lithium nickel composite oxide is preferably 80% by mass or higher, more preferably 90% by mass or higher, and still more preferably 95% by mass or higher.

The above-mentioned lithium nickel composite oxide to be preferably used is the one represented by the composition formula $LiNi_xM_{1-x}O_2$ (x represents a numerical value of 0.75 to 1, and M represents at least one metal element occupying nickel sites other than Ni). x is preferably 0.75 to 0.9, and more preferably 0.8 to 0.9.

M in the above composition formula preferably contains at least one metal selected from Co, Mn, Al, Mg, Fe, Cr, Ti and In, and more preferably contains at least one metal selected from Co, Mn and Al.

The lithium nickel composite oxide preferably contains Co as a metal occupying nickel sites other than Ni. Further, the lithium nickel composite oxide more preferably contains, in addition to Co, Mn or Al, that is, there can suitably be used a lithium nickel cobalt manganese composite oxide (NCM) having a layered rock salt structure, a lithium nickel cobalt aluminum composite oxide (NCA) having a layered rock salt structure, or a mixture thereof. NCM is preferably a composite compound represented by $LiNi_xCo_yMn_zO_2$ ($0.75 \leq x$ 0.9, $0.05 \leq y \leq 0.15$, $0.05 \leq z \leq 0.15$, x + y + z = 1). x in the formula is preferably $0.75 \leq x$ 0.85, and more preferably $0.8 \leq x$ 0.85. NCM includes, for example, $LiNi_{0.8}Co_{0.1}Mn_{0.1}O_2$.

The BET specific surface area (based on the measurement at 77K by the nitrogen adsorption method) of the positive electrode active material is preferably in the range of 0.1 to 1 m$^2$/g, and more preferably 0.3 to 0.5 m$^2$/g. In the case where the specific surface area of the positive electrode active material is excessively small, since the particle diameter is large, cracking becomes liable to be generated during the pressing time in the electrode fabrication and during the cycle time, and is likely to bring about remarkable degradation of characteristics and makes it difficult to make the electrode density high. Conversely, in the case where the specific surface area is excessively large, the necessary amount of the conductive auxiliary agent to be contacted with the active material becomes large, resultantly making it difficult to make the energy density high. When the specific surface area of the positive electrode active material is in the above range, from the viewpoint of the energy density and the cycle characteristics, an excellent positive electrode can be obtained.

The average particle diameter of the positive electrode active material is preferably 0.1 to 50 $\mu$m, more preferably 1 to 30 $\mu$m, and still more preferably 2 to 25 $\mu$m. Here, the average particle diameter means a particle diameter (median diameter: $D_{50}$) at a cumulative value of 50% in a particle size distribution (in terms of volume) by a laser diffraction scattering method. When the specific surface area of the positive electrode active material is in the above range and the average particle diameter is in the above range, from the viewpoint of the energy density and the cycle characteristics, an excellent positive electrode can be obtained.

The positive electrode active material layer can be formed as follows. The positive electrode active material layer can be formed by first preparing a slurry containing a positive electrode active material, a binder and a solvent (as required, further a conductive auxiliary agent), and applying the slurry on a positive electrode current collector, drying the slurry, and as required, pressing the dried slurry. As the slurry solvent to be used in the positive electrode fabrication, N-methyl-2-pyrrolidone (NMP) can be used.

As the binder, there can be used ones usually usable as binders for positive electrodes, such as polytetrafluoroethylene (PTFE) and polyvinylidene fluoride (PVDF).

The content of the binder in the positive electrode active material layer is, from the viewpoint of the binding power and the energy density, which are in a tradeoff relation, preferably 1 to 15% by mass, and more preferably 1 to 10% by mass.

Although a higher proportion of the positive electrode active material in the positive electrode active material layer is better because the capacity per mass becomes larger, addition of a conductive auxiliary agent is preferable from the point of reduction of the electrode resistance of the electrode; and addition of a binder is preferable from the point of the electrode strength. A too low proportion of the conductive auxiliary agent makes it difficult for a sufficient conductivity to be kept, and becomes liable to lead to an increase in the electrode resistance. A too low proportion of the binder makes it difficult for the adhesive power with the current collector, the active material and the conductive auxiliary agent to be kept, and causes electrode exfoliation in some cases.

The conductive auxiliary agent includes carbon black such as acetylene black. The content of the conductive auxiliary agent in the active material layer can be set in the range of 1 to 10% by mass.

Then, the porosity of the positive electrode active material layer (not including the current collector) constituting the positive electrode is preferably 30% or lower, and more preferably 20% or lower. Since when the porosity is high (that is, the electrode density is low), the contact resistance and the charge transfer resistance are likely to become high, the porosity is preferably thus made to be low, and resultantly, the electrode density can also be enhanced. On the other hand, when the porosity is too low (the electrode density is too high), the contact resistance becomes low, but the charge transfer resistance becomes high and the rate characteristic decreases, so a porosity in some degree is desirably secured. From this viewpoint, the porosity is preferably 10% or higher, and more preferably 12% or higher, and may be set at 15% or higher.

The porosity means a proportion occupied by a remainder volume obtained by subtracting a volume occupied by the particles of the active material, the conductive auxiliary agent and the like from an apparent volume of the whole active material layer (see the following expression). Therefore, the porosity can be determined by a calculation from the thickness and the mass per unit area of the active material layer, and the true density of the particles of the active material, the conductive auxiliary agent and the like.

$$\text{Porosity} = \text{(an apparent volume of the active material layer} - \text{a volume of the particles)/(the apparent volume of the active material layer)}$$

Here, the "volume of the particles" (a volume occupied by the particles contained in the active material layer) in the above expression can be calculated from the following expression.

$$\text{Volume of the particles} = \text{(a weight per unit area of the active material layer} \times \text{an area of the active material layer} \times \text{a content of the particles)/(a true density of the particles)}$$

Here, the "area of the active material layer" refers to an area of a plane thereof on the opposite side (separator side) to the current collector side.

The thickness of the positive electrode active material layer is not especially limited, and can suitably be set according to desired characteristics. For example, from the viewpoint of the energy density, the thickness can be set large; and from the viewpoint of the output characteristics, the thickness can suitably be set small. The thickness of the positive electrode active material layer can suitably be set, for example, in the range of 10 to 250 $\mu$m, and is preferably 20 to 200 $\mu$m, and more preferably 40 to 180 $\mu$m.

As the current collector for the positive electrode, aluminum, stainless steels, nickel, titanium and alloys thereof can be used. The shape thereof includes foils, flat plates and mesh forms. Particularly aluminum foils can suitably be used.

The lithium ion secondary battery according to the exemplary embodiment comprises the above positive electrode, a negative electrode and a nonaqueous electrolyte (for example, an electrolyte solution in which a lithium salt is dissolved). Further a separator can be provided between the positive electrode and the negative electrode. A plurality of pairs of the positive electrode and the negative electrode can be provided.

As a negative electrode active material, materials capable of occluding and releasing lithium ions, such as lithium metal, carbonaceous materials and Si-based materials can be used. The carbonaceous materials include graphite, amorphous carbon, diamond-like carbon, fullerene, carbon nanotubes and carbon nanohorns. As the Si-based materials, Si, $SiO_2$, $SiO_x$ (0 < x $\leq$ 2) and Si-containing composite materials can be used, or composite materials containing two or more thereof may be used.

In the case of using lithium metal as the negative electrode active material, a negative electrode can be formed by a system such as a melt cooling, liquid quenching, atomizing, vacuum deposition, sputtering, plasma CVD, optical CVD, thermal CVD and sol-gel systems.

In the case of using a carbonaceous material or a Si-based material as the negative electrode active material, a negative electrode can be obtained by mixing the carbonaceous material (or the Si-based material) and a binder such as a polyvinylidene fluoride (PVDF), dispersing and kneading the mixture in a solvent such as NMP to thereby obtain a slurry, applying and drying the slurry on a negative electrode current collector, and as required pressing the dried slurry. Alternatively, a negative electrode can be obtained by previously forming a negative electrode active material layer, and thereafter forming a thin film to become a current collector by a method such as a vapor deposition method, a CVD method or a sputtering method. The negative electrode thus fabricated has the current collector for the negative electrode, and the negative electrode active material layer formed on the current collector.

The average particle diameter of the negative electrode active material is, from the point of suppressing side-reactions during the charge and discharge time and thereby suppressing a decrease in the charge and discharge efficiency, preferably 1 $\mu$m or larger, more preferably 2 $\mu$m or larger, and further preferably 5 $\mu$m or larger, and from the viewpoint of the input and output characteristics and the viewpoint of the electrode fabrication (smoothness of the electrode surface, and the like), preferably 80 $\mu$m or smaller, and more preferably 40 $\mu$m or smaller. Here, the average particle diameter means a particle diameter (median diameter: $D_{50}$) at a cumulative value of 50% in a particle size distribution (in terms of volume) by a laser diffraction scattering method.

The negative electrode active material layer may contain a conductive auxiliary agent as required. As the conductive auxiliary agent, conductive materials generally used as conductive auxiliary agents for negative electrodes, such as carbonaceous materials such as carbon black, Ketjen black and acetylene black can be used.

The binder for the negative electrode is not especially limited, but includes polyvinylidene fluoride (PVdF), vinylidene fluoride-hexafluoropropylene copolymers, vinylidene fluoride-tetrafluoroethylene copolymers, styrene-butadiene copolymer rubber, polytetrafluoroethylene, polypropylene, polyethylene, polyimide, polyamideimide, methyl (meth)acrylate, ethyl (meth)acrylate, butyl (meth)acrylate, (meth)acrylonitrile, isoprene rubber, butadiene rubber and fluororubber. As the slurry solvent, N-methyl-2-pyrrolidone (NMP) and water can be used. In the case of using water as the solvent, carboxymethyl cellulose, methyl cellulose, hydroxymethyl cellulose, ethyl cellulose and polyvinyl alcohol can further be used as a thickener.

The content of the binder for the negative electrode is, from the viewpoint of the binding power and the energy density, which are in a tradeoff relation, in terms of content to negative electrode active material, preferably in the range of 0.5 to 30% by mass, more preferably in the range of 0.5 to 25% by mass, and still more preferably in the range of 1 to 20% by mass.

As a negative electrode current collector, copper, stainless steel, nickel, titanium and alloys thereof can be used.

As the electrolyte, a nonaqueous electrolyte solution in which a lithium salt is dissolved in one or two or more nonaqueous solvents can be used.

The nonaqueous solvent includes cyclic carbonates such as ethylene carbonate, propylene carbonate, vinylene carbonate and butylene carbonate; chain carbonates such as ethyl methyl carbonate (EMC), diethyl carbonate (DEC), dimethyl carbonate (DMC) and dipropyl carbonate (DPC); aliphatic carbonate esters such as methyl formate, methyl acetate and ethyl propionate; $\gamma$-lactones such as $\gamma$-butyrolactone; chain ethers such as 1,2-ethoxyethane (DEE) and ethoxymethoxyethane (EME); and cyclic ethers such as tetrahydrofuran and 2-methyltetrahydrofuran. These nonaqueous solvents can be used singly or as a mixture of two or more.

The lithium salt to be dissolved in the nonaqueous solvent is not especially limited, but examples thereof include $LiPF_6$, $LiAsF_6$, $LiAlCl_4$, $LiClO_4$, $LiBF_4$, $LiSbF_6$, $LiCF_3SO_3$, $LiCF_3CO_2$, $Li(CF_3SO_2)_2$, $LiN(CF_3SO_2)_2$, and lithium bisoxala-

toborate. These lithium salts can be used singly or as a combination of two or more. Further as a nonaqueous electrolyte, a polymer component may be contained. The concentration of the lithium salt can be established in the range of 0.8 to 1.2 mol/L, and 0.9 to 1.1 mol/L is preferable.

As the separator, there can be used resin-made porous membranes, woven fabrics, nonwoven fabrics and the like. Examples of the resin constituting the porous membrane include polyolefin resins such as polypropylene and polyethylene, polyester resins, acryl resins, styrene resins and nylon resins. Particularly polyolefin microporous membranes are preferable because being excellent in the ion permeability, and the capability of physically separating a positive electrode and a negative electrode. Further as required, a layer containing inorganic particles may be formed on the separator, and the inorganic particles include those of insulative oxides, nitrides, sulfides, carbide and the like. Among these, it is preferable that $TiO_2$ or $Al_2O_3$ be contained.

As an outer packaging container, there can be used cases composed of flexible films, can cases and the like, and from the viewpoint of the weight reduction of batteries, flexible films are preferably used.

As the flexible film, a film having resin layers provided on front and back surfaces of a metal layer as a base material can be used. As the metal layer, there can be selected one having a barrier property including prevention of leakage of the electrolyte solution and infiltration of moisture from the outside, and aluminum, stainless steel or the like can be used. At least on one surface of the metal layer, a heat-fusible resin layer of a modified polyolefin or the like is provided. An outer packaging container is formed by making the heat-fusible resin layers of the flexible films to face each other and heat-fusing the circumference of a portion accommodating an electrode laminated body. On the surface of the outer package on the opposite side to a surface thereof on which the heat-fusible resin layer is formed, a resin layer of a nylon film, a polyester resin film or the like can be provided.

In fabrication of the electrodes, as apparatuses to form the active material layers on the current collectors, apparatuses to carry out various application methods such as a doctor blade method, a die coater method, a gravure coater method, a transfer system and a vapor deposition system, and combinations of these application apparatuses can be used. In order to precisely form application edge portions of the active materials, a die coater is especially preferably used. The application systems of the active materials by a die coater are roughly classified into two kinds of continuous application systems in which an active material is continuously formed on a long current collector along the longitudinal direction thereof, and intermittent application systems in which applied and unapplied portions of an active material are alternately repeatedly formed along the longitudinal direction of a current collector, and one of these systems can suitably be selected.

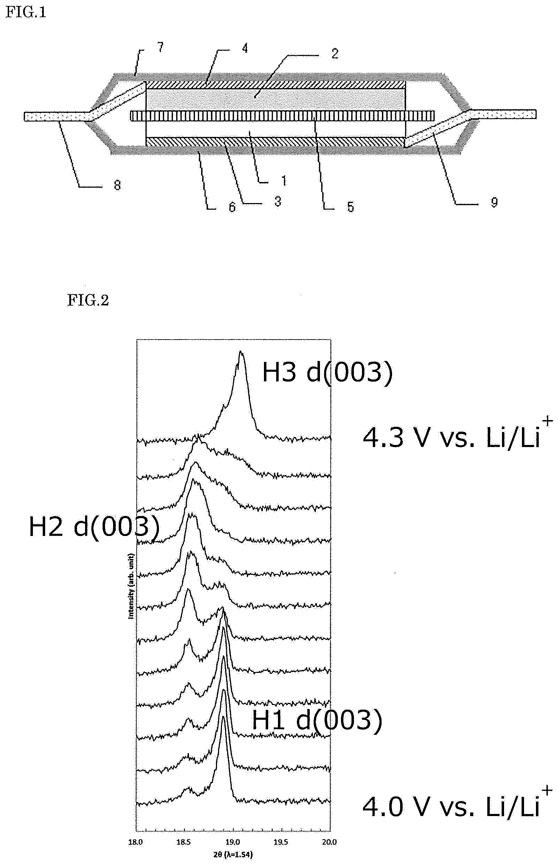

A cross-sectional view of one example (laminate-type) of the lithium ion secondary battery according to the exemplary embodiment is shown in Figure 1. As shown in Figure 1, the lithium ion secondary battery of the present example has a positive electrode comprising a positive electrode current collector 3 composed of a metal such as an aluminum foil and a positive electrode active material layer 1 containing a positive electrode active material provided thereon, and a negative electrode comprising a negative electrode current collector 4 composed of a metal such as a copper foil and a negative electrode active material layer 2 containing a negative electrode active material provided thereon. The positive electrode and the negative electrode are laminated through a separator 5 composed of a nonwoven fabric, a polypropylene microporous membrane or the like so that the positive electrode active material layer 1 and the negative electrode active material layer 2 face each other. The pair of electrodes is accommodated in a container formed of outer packages 6, 7 composed of an aluminum laminate film. A positive electrode tab 9 is connected to the positive electrode current collector 3, and a negative electrode tab 8 is connected to the negative electrode current collector 4. These tabs are led outside the container. The electrolyte solution is injected in the container, which is then sealed. There may be made a structure in which an electrode group in which a plurality of electrode pairs are laminated is accommodated in the container.

Examples

(Evaluation of the electrochemical stability of the positive electrode active material)

In order to evaluate the electrochemical stability of the lithium nickel composite oxide, in-situ XRD measurement was carried out as follows.

A slurry was formed by mixing a lithium nickel composite oxide (composition formula: $LiNi_{0.8}Mn_{0.1}Co_{0.1}O_2$), a conductive auxiliary agent, a binder and a solvent (NMP), and applied and dried on an Al foil to thereby obtain a positive electrode. The positive electrode and a counter electrode (metal lithium) were laminated through a separator; and a beryllium plate was disposed on the positive electrode current collector side to thereby fabricate a cell with a beryllium window. As an electrolyte solution, there was used a solution in which lithium hexafluorophosphate ($LiPF_6$) of 1 mol/L was dissolved in a mixed solvent of ethylene carbonate (EC) and diethyl carbonate (DEC) (volume ratio EC : DEC = 3 : 7).

In the course of charging by applying a voltage in the range of 3.0 to 4.3 V vs. $Li/Li^+$ on the cell, XRD measurement was carried out by irradiating the cell with X-ray from the beryllium plate side.

Figure 2 shows measurement results of in-situ XRD paying attention to the diffraction from the (003) plane of the lithium nickel composite oxide. This Figure shows results in the range of 4.0 to 4.3 V (vs. Li/Li$^+$). The ordinate is the intensity (arb. unit), and the abscissa is 2$\theta$ ($\lambda$ = 1.54).

As shown in the Figure, it is clear that the reaction proceeded through three types of phase (HI, H2, H3) in the course of charging. In the first phase, the peak position did not change from the charging initial period until 4.1 V (vs. Li/Li$^+$), and the intensity lowered. At around 3.7 V (vs. Li/Li$^+$), the second phase generated on the lower angle side, and thereafter, until around 4.2 V (vs. Li/Li$^+$), the intensity and the peak position continuously changed. Further at around 4.2 V (vs. Li/Li$^+$), the third phase generated on the higher angle side. Then, at 4.2 to 4.3 V (vs. Li/Li$^+$), a sharp phase change (structural change) occurred. It is conceivable that such a phase change (structural change) caused the rise in the charge transfer resistance in a high SOC region.

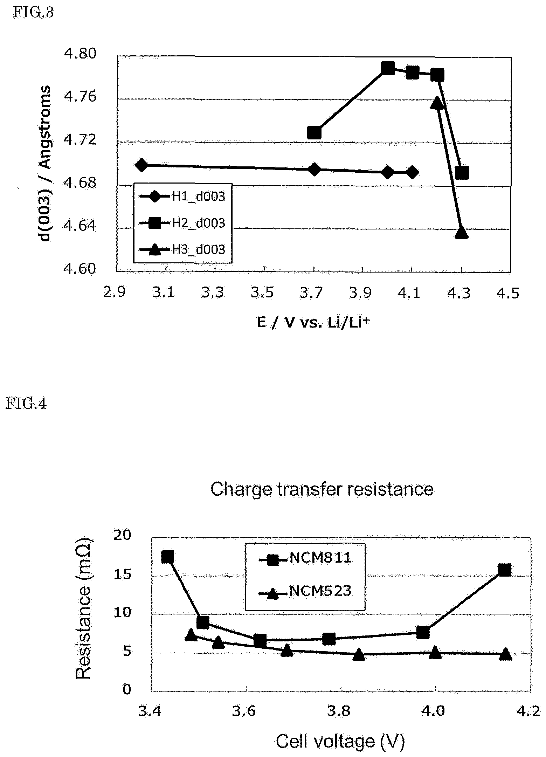

Figure 3 shows relations between the interplanar spacing d(003) and the charge voltage fabricated based on the measurement results of XRD.

It is preferable that before the sharp phase change (structural change) in Figure 2, the charge voltage reach the upper limit voltage in the full charge state (SOC: 100%). At this time, as shown in Figure 2, it is preferable that the intensity (that based on H1) at 2$\theta$ = 18.9 be higher than the intensity (that based on H3) at 2$\theta$ = 19.1.

As shown in Figure 3, when the upper limit voltage is set in the range in charge voltages (3.7 to 4.25 V (vs. Li/Li$^+$)) where a crystal phase having an interplanar spacing d(003) larger than an interplanar spacing d(003) (4.7 Å) in the complete discharge state (SOC: 0%, the lower limit voltage of 3 V (vs. Li/Li$^+$)), is present, the sharp phase change can be avoided. That is, since the region where the charge transfer resistance largely rises (the crystal phase (H3) in which the interplanar spacing d(003) drastically becomes small by the sharp phase change) can be avoided, a battery good in input and output characteristics can be provided.

(Fabrication of a battery and evaluation of the charge transfer resistance)

By using, as the positive electrode active material, the lithium nickel composite oxide having a layered rock salt structure, a lithium ion secondary battery was fabricated as follows, and the charge transfer resistance was measured.

(Example 1)

By using the lithium nickel composite oxide (LiNi$_{0.8}$Co$_{0.1}$Mn$_{0.1}$O$_2$: NCM811)(BET specific surface area: 0.46 m$^2$/g) having a layered rock salt structure as the positive electrode active material, a carbon black as the conductive auxiliary agent, a polyvinylidene fluoride (PVDF) as the binder, these were mixed so that the mass ratios became positive electrode active material : conductive auxiliary agent : binder = 93 : 4 : 3 to thereby prepare a slurry in which these were dispersed in the organic solvent. The slurry was applied on positive electrode current collectors (aluminum foils) and dried to thereby form positive electrode active material layers on both surfaces of the positive electrode current collectors. The resultants were rolled by a roller press machine, and processed into a predetermined size to thereby obtain positive electrode sheets.

A graphite coated with an amorphous carbon on its surface was used as a negative electrode active material; PVDF was used as a binder; and these were mixed and dispersed in an organic solvent to thereby prepare a slurry. The slurry was applied and dried on a negative electrode current collector (copper foil) to thereby form a negative electrode active material layer on both the surfaces. The resultant was rolled by a roller press machine and processed into a predetermined size to thereby obtain a negative electrode sheet.

One sheet of the fabricated positive electrode sheet and two sheets of the fabricated negative electrode sheets were alternately laminated through a separator composed of a polypropylene of 25 $\mu$m in thickness. A negative electrode terminal and a positive electrode terminal were attached thereto; the resultant was accommodated in an outer packaging container composed of an aluminum laminate film; the electrolyte solution in which a lithium salt was dissolved was added in the container, which were then sealed to thereby obtain a laminate-type lithium ion secondary battery. Here, as the solvent of the electrolyte solution, a mixed solution of EC and DEC (EC/DEC=3/7 (in volume ratio)) was used and 1mol/L of LiPF$_6$ as the lithium salt was dissolved in the mixed solvent.

For the obtained battery, the charge transfer resistance depending on the voltage was measured as follows. The result is shown in Figure 4.

(Reference Example 1)

As Reference Example, a battery was fabricated as in Example 1, except for replacing the positive electrode active material with a lithium nickel composite oxide (LiNi$_{0.5}$Co$_{0.2}$Mn$_{0.3}$O$_2$: NCM523) having a low content rate of nickel, and the charge transfer resistance was similarly measured. The result is together shown in Figure 4.

(Measurement of the charge transfer resistance)

The charge transfer resistance was subjected to an alternating current impedance measurement at an open circuit voltage, and calculated from a circular arc of a Cole-Cole plot.

As shown in Figure 4, it is clear that the battery (Example 1) using a lithium composite oxide having a higher content rate of nickel had a higher charge transfer resistance, particularly in a high-voltage region, than that of the battery (Reference Example 1) using a lithium composite oxide having a lower content rate of nickel. In the battery according to the exemplary embodiment, however, since a sharp phase change does not occur up to the upper limit voltage in the lithium nickel composite oxide in the positive electrode, a further rise in the charge transfer resistance is suppressed; then, there can be provided the battery better in the input and output characteristics than common batteries using a nickel-rich lithium composite oxide.

In the foregoing, the present invention has been described with reference to the exemplary embodiments and the Examples; however, the present invention is not limited to the exemplary embodiments and the Examples. Various modifications understandable to those skilled in the art may be made to the constitution and details of the present invention within the scope thereof.

The present application claims the right of priority based on Japanese Patent Application No. 2015-220159, filed on November 10, 2015, the entire disclosure of which is incorporated herein by reference.

Reference Signs List

1    POSITIVE ELECTRODE ACTIVE MATERIAL LAYER
2    NEGATIVE ELECTRODE ACTIVE MATERIAL LAYER
3    POSITIVE ELECTRODE CURRENT COLLECTOR
4    NEGATIVE ELECTRODE CURRENT COLLECTOR
5    SEPARATOR
6    LAMINATE OUTER PACKAGE
7    LAMINATE OUTER PACKAGE
8    NEGATIVE ELECTRODE TAB
9    POSITIVE ELECTRODE TAB

**Claims**

1.  A lithium ion secondary battery, comprising: a positive electrode comprising, as a positive electrode active material, a lithium nickel composite oxide having a layered rock salt structure; a negative electrode comprising a negative electrode active material capable of occluding and releasing lithium ions; an electrolyte; and an outer package, wherein the lithium nickel composite oxide is represented by the composition formula $LiNi_xM_{1-x}O_2$ where x represents a numerical value of 0.75 to 1, and M represents at least one metal element occupying nickel sites other than Ni; and the lithium nickel composite oxide has a crystal phase having, in a full charge state, an interplanar spacing d(003) larger than an interplanar spacing d(003) in a complete discharge state.

2.  The lithium ion secondary battery according to claim 1, wherein the crystal phase has a ratio of the interplanar spacing d(003) in the full charge state to the interplanar spacing d(003) in the complete discharge state of 1.001 or higher.

3.  The lithium ion secondary battery according to claim 1 or 2, wherein x in the composition formula is 0.75 to 0.9.

4.  The lithium ion secondary battery according to any one of claims 1 to 3, wherein M comprises at least one selected from the group consisting of Co, Mn and Al.

5.  The lithium ion secondary battery according to any one of claims 1 to 3, wherein M comprises at least Co and Mn.

6.  The lithium ion secondary battery according to any one of claims 1 to 5, wherein the battery has an upper limit voltage in a range of 3.7 to 4.25 V (vs. Li/Li$^+$).

7.  A method for manufacturing a lithium ion secondary battery comprising: a positive electrode comprising, as a positive electrode active material, a lithium nickel composite oxide having a layered rock salt structure; a negative electrode comprising a negative electrode active material capable of occluding and releasing lithium ions; an electrolyte; and an outer package, the method comprising:

forming the positive electrode;

forming the negative electrode;

accommodating the positive electrode, the negative electrode and the electrolyte in the outer package,

wherein the lithium nickel composite oxide is represented by the composition formula $LiNi_xM_{1-x}O_2$ where x represents a numerical value of 0.75 to 1, and M represents at least one metal element occupying nickel sites other than Ni; and

interplanar spacings d(003) of the lithium nickel composite oxide in charge voltages in a range including a lower limit voltage and an upper limit voltage are measured by X-ray analysis, and the upper limit voltage is set in a range in the charge voltages where a crystal phase having an interplanar spacing d(003) larger than an interplanar spacing d(003) in a complete discharge state is present.

8. The manufacturing method according to claim 7, wherein the crystal phase has a ratio of the interplanar spacing d(003) in the full charge state to the interplanar spacing d(003) in the complete discharge state of 1.001 or higher.

9. The manufacturing method according to claim 7 or 8, wherein x in the composition formula is 0.75 to 0.9.

10. The manufacturing method according to any one of claims 7 to 9, wherein M comprises at least one selected from the group consisting of Co, Mn and Al.

11. The manufacturing method according to any one of claims 7 to 10, wherein the upper limit voltage is in the range of 3.7 to 4.25 V (vs. $Li/Li^+$).

FIG.1

FIG.2

FIG.3

FIG.4

Charge transfer resistance

## INTERNATIONAL SEARCH REPORT

| International application No. |
| --- |
| PCT/JP2016/082080 |

**A. CLASSIFICATION OF SUBJECT MATTER**
*H01M4/525*(2010.01)i, *H01M4/505*(2010.01)i

According to International Patent Classification (IPC) or to both national classification and IPC

**B. FIELDS SEARCHED**

Minimum documentation searched (classification system followed by classification symbols)
H01M4/525, H01M4/505

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | YAMADA Shuji, Synthesis and properties of LiNiO2 as cathode material for secondary batteries, Journal of Power Sources, 1995, 54, 209-213 | 1,2,6<br>3-5,7-11 |
| X<br>A | JP 9-270260 A (Showa Denko Kabushiki Kaisha), 14 October 1997 (14.10.1997), claim 1; paragraphs [0021] to [0036] & JP 2005-187326 A | 1,2,6<br>3-5,7-11 |

| ☒ Further documents are listed in the continuation of Box C. | ☐ See patent family annex. |
| --- | --- |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>02 December 2016 (02.12.16) | Date of mailing of the international search report<br>13 December 2016 (13.12.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

13

**INTERNATIONAL SEARCH REPORT**

International application No.

PCT/JP2016/082080

C (Continuation).  DOCUMENTS CONSIDERED TO BE RELEVANT

| Category* | Citation of document, with indication, where appropriate, of the relevant passages | Relevant to claim No. |
|---|---|---|
| X<br>A | WO 2012/124244 A1 (Panasonic Corp.),<br>20 September 2012 (20.09.2012),<br>claims 3, 4; paragraphs [0081] to [0084],<br>[0093] to [0096], [0151] to [0223]; fig. 9<br>& JP 5117638 B2      & US 2013/0314051 A1<br>claims 3 to 4; paragraphs [0118] to [0122],<br>[0132] to [0136], [0192] to [0332]<br>& EP 2688135 A1       & CN 103283083 A | 1-4,6<br>5,7-11 |
| X<br>A | JP 2000-294240 A (Toyota Central Research and<br>Development Laboratories, Inc.),<br>20 October 2000 (20.10.2000),<br>paragraphs [0038] to [0055]<br>(Family: none) | 1-4,6<br>5,7-11 |
| X<br>A | WO 2015/156400 A1 (Nissan Motor Co., Ltd.),<br>15 October 2015 (15.10.2015),<br>paragraphs [0097] to [0109]<br>(Family: none) | 1-6<br>7-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6215800 A
- JP 7320721 A
- JP 2000294240 A
- JP 2015220159 A